# EUROPÄISCHE PATENTSCHRIFT

(11) **EP 0 465 977 B1**
(45) Veröffentlichungstag und Bekanntmachung des Hinweises auf die Patenterteilung: **01.06.1994**
(21) Anmeldenummer: 91110874.4
(22) Anmeldetag: 01.07.1991
(51) Int. Cl.: F16L 5/00, H02G 3/22

(54) **Mauerdurchführung für erdverlegte Kabel oder dergleichen**
Wall feed-through for buried cables or the like
Traversée de mur pour câbles enterrés ou similaires

(30) Priorität: 05.07.1990 DE 9010193 U; 07.05.1991 DE 4114927
(43) Veröffentlichungstag der Anmeldung: 15.01.1992
(73) Patentinhaber: Sichert GmbH & Co., D-12277 Berlin (DE)
(72) Erfinder: Frewer, Raimund, Dipl.-Ing., W-5840 Schwerte 1 (DE); Hesse, Hans-Hermann, Dipl.-Ing., W-1000 Berlin 37 (DE)
(74) Vertreter: Vogeser, Werner, Dipl.-Ing.

(56) Entgegenhaltungen:
- DE-U- 9 001 219
- US-A- 3 684 220

## Beschreibung

Die Erfindung betrifft eine Mauerdurchführung für erdverlegte Kabel, Rohrleitungen, Schläuche od.dgl, welche aus einem diese aufnehmenden Mantelrohr besteht, welches in einen Mauerdurchbruch einsetzbar und in diesem mittels eine Vergußmasse festlegbar und abdichtbar ist.

Mauerdurchführungen der in Betracht kommenden Art gibt es in zahlreichen Ausführungsformen, die in der Praxis mehr oder weniger brauchbar sind. An derartige Mauerdurchführungen werden hohe Ansprüche auf Dichtheit gegen Wasserdurchtritt gestellt. Dies ist ein Grund dafür, daß die vorbekannten Mauerdurchführungen einen hohen konstruktiven Aufwand erfordern und aus einer Vielzahl von Einzelteilen bestehen, wodurch auch die Montage teilweise umständlich und zeitaufwendig ist.

Der Erfindung liegt die Aufgabe zugrunde, eine verhältnismäßig einfache und kostengünstige, aber doch allen Ansprüchen insbesondere in bezug auf die Abdichtung und ihren festen Sitz im Mauerwerk voll erfüllende Vorrichtung zu schaffen, für deren Herstellung ein geringer Aufwand erforderlich ist und auch rasch und einfach montiert werden kann.

Zur Lösung dieser Aufgabe wird gemäß der Erfindung vorgeschlagen, das für die Mauerdurchführung vorzusehende Mantelrohr zumindest an seinem einen Ende mit einem Außengewinde zu versehen, auf welches wenigstens eine mit mehreren radialen Flanschen versehene Gewindemuffe aufgeschraubt ist und welches an seinem anderen Ende mit einer Verdrehsicherung ausgestattet ist.

Die auf das Außengewinde des Mantelrohrs aufgeschraubte Gewindemuffe soll in etwa in der Mitte des Mauerdurchbruchs liegen und hat die Aufgabe, einerseits das Mantelrohr im Mauerdurchbruch zu zentrieren und andererseits die von außer in den Zwischenraum zwischen dem Mantelrohr und dem Mauerwerk eingepreßte, vorzugsweise dauerelastische Vergußmasse abzufangen und abzustützen. Damit das Mantelrohr in der Mauerdurchführung nicht verdrehbar ist, ist an demjenigen Ende, welches von der Vergußmasse umgeben ist, eine Verdrehsicherung angeordnet.

Eine Verbesserung des Haftungsverbundes läßt sich bei aus Kunststoffen bestehenden Mantelrohren dadurch erreichen, daß auf diejenigen Oberflächen, welche mit der das Rohr umgebenden Vergußmasse in Berührung kommen, eine Metallschicht aufgebracht ist.

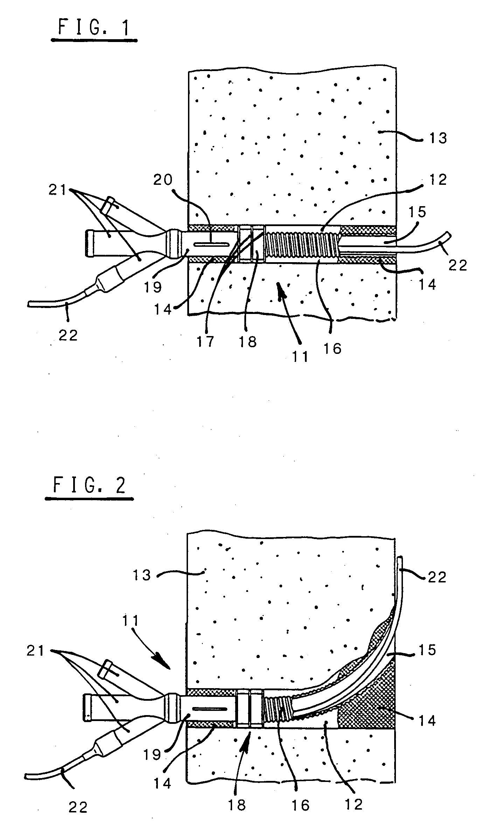

Weitere Merkmale des erfindungsgemäß ausgebildeten Mantelrohrs der Mauerdurchführung für erdverlegte Kabel u.dgl. gehen aus den Unteransprüchen sowie aus der nachfolgenden Beschreibung zweier bevorzugter Ausführungsbeispiele hervor, welche in den Figuren 1 und 2 der Zeichnung dargestellt sind. Es zeigen:
- Fig. 1: einen Querschnitt durch ein Mauerwerk mit einem Mauerdurchbruch, in welches ein gerades Mantelrohr eingesetzt ist, und
- Fig. 2: einen Querschnitt durch ein Mauerwerk, in dessen Mauerdurchbruch ein flexibles bzw. biegsames Mantelrohr eingesetzt ist.

Zum Zwecke der Mauerdurchführung von erdverlegten Kabeln, Rohren, Schläuchen od.dgl. ist ein an sich bekanntes Mantelrohr 11 in den Durchbruch 12 eines Mauerwerks 13 eingesetzt, wie dies aus den Figuren 1 und 2 hervorgeht. Um den Mauerdurchbruch druckwasser- und gasdicht abzudichten, ist der Zwischenraum zwischen dem Mantelrohr 11 und der Wandung des Mauerdurchbruchs 12 mit einer Vergußmasse 14 ausgefüllt, die zumeist aus einem kostengünstigen Betonmörtel besteht oder auch eine dauerelastische Kunststoff- od.dgl. Masse sein kann, und welche im Bereich der beiden Enden des Mauerdurchbruchs 12 angeordnet ist. Das Mantelrohr 11 ist an seinem einen hinteren Ende 15, bei Mauerdurchführungen von Gebäudemauern an dem inneren Ende, mit einem Außengewinde 16 versehen, auf welches eine mit radialen Flanschen 17 versehene Gewindemuffe 18 aufgeschraubt ist. Diese hat die Aufgabe, einerseits die von außen her in den Zwischenraum zwischen dem Mantelrohr 11 und der Wandung des Mauerdurchbruchs 12 eingepreßte Vergußmasse 14 abzufangen und abzustützen, und andererseits das Mantelrohr 11 im Mauerdurchbruch 12 zu zentrieren. Bei stärkerwandigem Mauerwerk kann es zweckmäßig sein, auf das Mantelrohr 11 im Bereich des hinteren Endes 15 eine zweite Gewindemuffe aufzuschrauben.

Das andere, vordere Ende 19 des Mantelrohrs 11 hat vorzugsweise eine rauhe, gegebenenfalls geriffelte oder ähnliche Oberfläche, die eine gute Haftungsverbindung mit der Vergußmasse 14 eingeht. Überdies können axiale Rippen oder Nuten 20 vorgesehen sein, um eine Verdrehung des Mantelrohrs 11 sicher zu verhindern.

Das Mantelrohr besteht vorteilhafterweise aus Kunststoff, wodurch es außerordentlich rationell herstellbar ist. In diesem Fall läßt sich der Haftverbund zwischen dem Mantelrohr 11 und der Vergußmasse 14, insbesondere dann, wenn diese aus Beton besteht, dadurch verbessern, wenn auf die in Betracht kommenden Flächen eine Metallschicht aufgebracht ist. Diese sollte aus einem nichtkorrodierenden Werkstoff, insbesondere rostfreiem Stahl, bestehen. Die Aufbringung der Metallschicht erfolgt nach an sich bekannten und üblichen Methoden, wobei vorzugsweise das Aufdampfen des Metalls Anwendung findet.

Es konnte bei Versuchen festgestellt werden, daß sich der Haftungsverbund von mit einer Metallschicht versehenen Mantelrohren gegenüber unbeschichteten Mantelrohren um ca. 1/4 verbessern läßt.

Für Mantelrohre 11, die an ihrem inneren Ende 15 mit einer Krümmung versehen sein müssen, verwendet man ein flexibles elastisches Kunststoffmaterial bzw. bildet das Mantelrohr selbst derart aus, daß es flexibel und biegbar ist, wie dies Fig. 2 erkennen läßt.

Vorteilhafterweise befinden sich an dem äußeren Ende 19 des Mantelrohrs 11 mehrere Einführungsstutzen 21 für die separate Einführung von Kabeln 22 od.dgl. in das Mantelrohr 11.

Die derart ausgebildete Vorrichtung läßt sich außerordentlich rasch und einfach und somit rationell montieren, ohne daß darunter die Qualität der Mauerdurchführung und insbesondere deren Dichtheit leidet.

## Patentansprüche

1. Mauerdurchführung für erdverlegte Kabel, Rohrleitungen, Schläuche od.dgl., bestehend aus einem diese aufnehmenden Mantelrohr, welches in einen Mauerdurchbruch einsetzbar und in diesem mittels einer Vergußmasse festlegbar und abdichtbar ist, dadurch gekennzeichnet, daß das Mantelrohr (11) zumindest an seinem einen Ende (15) mit einem Außengewinde (16) versehen ist, auf welches wenigstens eine mit mehreren radialen Flanschen (17) versehene Gewindemuffe (18) aufgeschraubt ist, und daß das andere Ende des Mantelrohrs (11) an seiner Außenseite mit einer Verdrehsicherung ausgestattet ist.

2. Mauerdurchführung nach Anspruch 1, dadurch gekennzeichnet, daß die Verdrehsicherung des Mantelrohrs (11) aus einer Oberflächenaufrauhung und bzw. oder einer Riffelung besteht.

3. Mauerdurchführung nach Anspruch 1 oder 2, dadurch gekennzeichnet, daß die Verdrehsicherung des Mantelrohrs (11) aus Rippen oder Nuten (20) an seinem anderen Ende (19) besteht.

4. Mauerdurchführung nach Anspruch 1, 2 oder 3, dadurch gekennzeichnet, daß das Mantelrohr (11) aus Kunststoff besteht.

5. Mauerdurchführung nach Anspruch 4, dadurch gekennzeichnet, daß das Mantelrohr (11) ein flexibles, biegbares Kunststoffrohr ist.

6. Mauerdurchführung nach Anspruch 4 oder 5, dadurch gekennzeichnet, daß die Oberfläche des Mantelrohrs (11), die mit der Vergußmasse (14) in Berührung kommt, mit einer Metallschicht versehen ist.

7. Mauerdurchführung nach Anspruch 6, dadurch gekennzeichnet, daß die Metallschicht aus einem nichtkorrodierenden Metall, vorzugsweise rostfreiem Stahl, besteht.

8. Mauerdurchführung nach Anspruch 6 oder 7, dadurch gekennzeichnet, daß die Metallschicht auf das Mantelrohr (11) aufgedampft ist.

9. Mauerdurchführung nach einem der Ansprüche 1 bis 8, dadurch gekennzeichnet, daß das äußere Ende (19) des Mantelrohrs (11) mehrere Kabeleinführungsstutzen (21) aufweist.

## Claims

1. A wall duct for underground cable, pipelines, hose or the like, comprising a pipe cover which receives the cables or the like, which is inserted into a gap in a wall and can be fixed and sealed therein by means of a sealing compound, characterized in that the pipe cover (11) at least at one of its ends (15), is provided with an outer thread (16) onto which is screwed at least one pipe coupling (18) provided with several radial flanges (17) and in that the other end of the pipe cover (11) is provided with an anti-torsion means on its outer side.

2. A wall duct according to claim 1, characterized in that the anti-torsion means of the pipe cover (11) comprises a rough and/or corrugated surface.

3. A wall duct according to claim 1 or 2, characterized in that the locking element of the pipe cover (11) comprises ribs or grooves (20) on its other end (19).

4. A wall duct according to claim 1, 2 or 3, characterized in that the pipe cover (11) is made of plastic.

5. A wall duct according to claim 4, characterized in that the pipe cover (11) is a flexible, pliable plastic pipe.

6. A wall duct according to claim 4 or 5, characterized in that the surface of the pipe cover (11) which comes into contact with the sealing compound (14) is provided with a metal layer.

7. A wall duct according to claim 6, characterized in that the metal layer is made of a non-corroding metal, preferably stainless steel.

8. A wall duct according to claim 6 or 7, characterized in that the metal layer is vapour-deposited onto the pipe cover (11).

9. A wall duct according to any of claims 1 to 8, characterized in that the external end (19) of the pipe cover (11) comprises several cable inlet connections (21).

## Revendications

1. Traversée de mur pour câbles enterrés, canalisations, tuyaux ou analogues, constituée d'un manchon les recevant, qui peut être introduit dans une percée dans un mur et peut y être bloqué et rendu étanche au moyen d'une masse de remplissage, caractérisée en ce que le manchon (11) est muni au moins à l'une de ses extrémités (15) d'un filetage extérieur (16), sur lequel est vissé un manchon taraudé (18) muni de plusieurs collets radiaux (17), et en ce que l'autre extrémité du manchon (11) est munie sur son côté extérieur d'un dispositif anti-torsion.

2. Traversée de mur selon la revendication 1, caractérisée en ce que le dispositif anti-torsion du manchon (11) est constitué d'un cannelage de surface et/ou d'un striage.

3. Traversée de mur selon la revendication 1 ou 2, caractérisée en ce que le dispositif anti-torsion du manchon (11) est constitué de nervures ou de rainures (20) à son autre extrémité (19).

4. Traversée de mur selon la revendication 1, 2 ou 3, caractérisée en ce que le manchon (11) est en matière plastique.

5. Traversée de mur selon la revendication 4, caractérisée en ce que le manchon (11) est un tube en plastique flexible qu'on peut couder.

6. Traversée de mur selon la revendication 4 ou 5, caractérisée en ce que la surface du manchon (11), qui vient en contact avec la masse de remplissage (14), est garnie d'une couche de métal.

7. Traversée de mur selon la revendication 6, caractérisée en ce que la couche de métal est en métal résistant à la corrosion, de préférence en acier inoxydable.

8. Traversée de mur selon la revendication 6 ou 7, caractérisée en ce que la couche de métal est déposée par vaporisation sur le manchon (11).

9. Traversée de mur selon l'une des revendications 1 à 8, caractérisée en ce que l'extrémité extérieure (19) du manchon (11) présente plusieurs embouts d'entrée de câble (21).
